Europäisches Patentamt

(19) European Patent Office

Office européen des brevets

(11) EP 0 920 808 A1

(12) EUROPEAN PATENT APPLICATION

(43) Date of publication:
09.06.1999 Bulletin 1999/23

(51) Int. Cl.6: A22C 13/00, C08B 3/16

(21) Application number: 98122564.2

(22) Date of filing: 02.12.1998

(84) Designated Contracting States:
AT BE CH CY DE DK ES FI FR GB GR IE IT LI LU
MC NL PT SE
Designated Extension States:
AL LT LV MK RO SI

(30) Priority: 05.12.1997 JP 33584597

(71) Applicant:
Gunze Kobunshi Corporation
Isehara-shi, Kanagawa (JP)

(72) Inventors:
• Maruoka, Toshiaki
  Hadano-shi, Kanagawa (JP)
• Matsunami, Midori
  Hadano-shi, Kanagawa (JP)
• Arai, Ichiro
  Isehara-shi Kanagawa (JP)

(74) Representative: HOFFMANN - EITLE
Patent- und Rechtsanwälte
Arabellastrasse 4
81925 München (DE)

(54) Films for casings of smoked foods

(57) There is disclosed a film for casing of a smoked food comprising a cellulose acetate propionate or a film comprising a blended product of a cellulose acetate propionate and a polyamide.

## Description

BACKGROUND OF THE INVENTION

1. Field of the invention

The present invention relates to a tubular film employable as a smoking casing which is to be packed with a processed meat such as ham and sausage or cheese and to be subjected to smoking treatment, as well as, to a smoked food having such a film as a casing.

2. Prior art

Natural casing such as of animal guts and fibrous casings made of paper into which viscose is impregnated by coating have been employed for cooking processed meats such as ham and sausage or cheeses by the treatment of smoking and heating. However, animal guts have irregular shapes and strength, and thus, have disadvantage that it is difficult to supply animal guts constantly in response to demands . Meanwhile, fibrous casings are preferred, since a food product having such casings has good appearance and can produce an image that they are of high quality. However, they involve problems that they have high water vapor permeability to cause great weight loss in the content and high oxygen permeability to cause rotting and molding of the content during a long term storage, and that they develop offensive odor and have hard texture or feeling, so that they must be subjected to pretreatment including immersion in water before they are used.

Meanwhile, polyamide films such as polycapramides and polyhexamethylene adipamides which are employed as synthetic plastic casings enjoy advantages that they allow to give some smoking effect under high humidity conditions, that they have high tensile strength at break, high impact strength, excellent dimensional stability and excellent oxygen barrier properties, and that they enable extended storage of contents. However, smoking effects to be achieved by the polyamide films is very small as compared with those achieved by the fibrous casings, and the polyamide films are not satisfactory to be employed as smoking casings.

SUMMARY OF THE INVENTION

The present invention relates to a heat-shrinkable film employable as smoking casing substituting for the fibrous casings, which can be subjected to smoking treatment and can be smoke-flavored and seasoned and which has appropriate unpermeability to water vapor and also strength, as well as, to a smoked food cased with such a film.

The present invention is a film employable as a casing for making a smoked food, which comprises a cellulose acetate propionate.

The film of the present invention may further comprise a belnded product of the cellulose acetate propionate and a polyamide.

DESCRIPTION OF THE PREFERRED EMBODIMENTS

The present invention is explained in detail below.

The film of the present invention has a water vapor permeability constant of $7.00 \times 10^{-10}$ kg/m/day/Pa or more, preferably $7.00 \times 10^{-10}$ kg/m/day/Pa to $5.00 \times 10^{-8}$ kg/m/day/Pa, more preferably $7.00 \times 10^{-10}$ to $1.00 \times 10^{-8}$ kg/m/day/Pa, is permeable by a water component containing smoke flavor and seasoning components, and is suitably employed for smoking treatment. Moreover, the film has strength which is endurable or sufficient to withstand casing treatments including clipping, shearing and filling of a content.

Particularly preferred is a single layered film for casing having a thickness of 5 to 90 µm, made of a blended material of a cellulose acetate propionate and a polyamide at a weight ratio of the former to the latter of 5 to 90 : 95 to 5, preferably 5 to 30 : 95 to 70. Such a single layered film for casing has high tensile strength at break, high impact strength, excellent dimensional stability and excellent oxygen barrier properties.

The cellulose acetate propionate film employable according to the present invention has a water vapor permeability constant of $7.00 \times 10^{-10}$ kg/m/day/Pa or more. The cellulose acetate propionate film has a substitution degree of a propionyl group being 2.50 to 2.35, a substitution degree of an acetyl group being 0.3 to 0.5 and a substitution degree of a hydroxyl group being 0.20 to 0.25. The film has a density of 1.19 to 1.21 g/cm$^3$, a pour point of 150 to 170°C and a Vicat softening point of 87 to 110°C.

As the polyamide, 6-nylon, 6-66 copolymerized nylon, 11-nylon, 12-nylon, 6-12 copolymerized nylon or a mixture thereof can be employed.

The casing material preferably contains, as an additive, 0.1 to 10% by weight of a cellulose powder (50 to 400 mesh: ≥ 90 %) containing 70 % by weight or more of α-cellulose. Thus, when the film is subjected to smoking, it is tinted with golden-yellowish fumed color and is allowed to have a matted and grained uneven surface, impressing an appearance which can produce an image that the product cased in it is of high-quality products.

Other additives, for example, a phthalic acid ester such as dimethyl phthalate, diethyl phthalate, dibutyl phthalate, di-(2-ethylhexyl) phthalate and di-(ethoxyethyl) phthalate; an aliphatic dibasic acid ester such as di-(2-ethylhexyl) adipate, di-(2-ethylhexyl) azelate and dimethyl sebacate; a glycol derivative such as methylphthalylethyl glycolate, ethylphthalylethyl glycolate and butylphthalylbutyl glycolate; a glycerol derivative such as glycerol triacetate and glycerol tripropionate; a phosphoric acid ester such as tributyl phosphate and tricresyl phosphate; camphor; or a fatty acid ester such as triethyl citrate, n-butyl stearate and diethyl succinate may be additionally employed alone or in admixture as a plasticizer.

Since a thermoplastic film as described above is employed in the present invention, the film is flexible and soft to the touch, and the casing can be subjected to biaxial orientation to about 1.0 to 3.5-fold longitudinally and crosswise (laterally), respectively. The casing has a property of undergoing shrinking when it is heat-treated, for example, when it is immersed in a 95°C hot water for 30 seconds, it shrinks by 1 to 30 % longitudinally and crosswise respectively, so that the casing material remains in intimate contact with the content even after the smoked product is cooled, to give a crumple-free final cased product.

When the smoked food according to the present invention is produced, a food is packed into the tubular casing, and then the cased product can be subjected to smoking treatment by conventional procedures. The smoking treatment is carried out at a temperature of 20 to 100°C, preferably at 50 to 90°C. This smoking treatment can be carried out in the presence of water or water vapor before, during or after a heat treatment. A heat treatment for drying is carried out at 60 to 85°C before the steaming and smoking treatment, and after subjecting to the steaming and smoking treatment, a cooling step of spraying cold water to the product is carried out. The temperature during the smoking treatment and the heat treatment is optionally selected such that a predetermined degrees of cooking and smoke flavor may be imparted to the final product.

A smoked food having the casing according to the present invention maintains the weight of the food packed therein even after a long term storage, shows resistance to fungi such as molds, and forms no crumple in the cased food product even after cooling. Thus, products which are excellent in terms of flavor and appearance can be obtained.

EXAMPLES

The present invention will be described in more detail by referring to the working examples.

Example 1

To a cellulose acetate propionate resin (density: 1.19; pour point: 150°C; Vicat softening point: 91°C) was added 1% by weight of a cellulose powder (α-cellulose content: 90 % or more; grain size (100 mesh pass): ≥ 90 %), and the resulting mixture was subjected to extrusion over a melt extruder having a circular die attached at the tip of an outlet to form a cylindrical film which was then subjected to 2-fold orientation both longitudinally and crosswise to obtain a cylindrical film casing having a flat width of 70 mm and a thickness of 55 μm. This casing had a matted and grained surface. The casing material, when immersed in a hot water (95°C x 30 sec.), showed shrinkage factors of 10 % in longitudinal direction and 20 % in crosswise direction.

Amount of water vapor permeation and a water vapor permeability constant of the film thus obtained were measured by employing a moisture vapor permeability tester "MAS 1000" (trade name) manufactured by MAS Corp., U.S.A. in accordance with ASTM F-1770 under conditions of 37.8°C x 100% RH. Water vapor permeability constant P (kg/m/day/Pa) was calculated according to the formula: water vapor diffusion coefficient D (m$^2$/hr) x water vapor solubility coefficient S (kg/m$^3$ · Pa) . The results are shown in Table 1.

Example 2

To a blended material of 75 % by weight of Nylon 6-66 = 85 : 15 copolymerized resin (density: 1.14; m.p.: 191°C) and 25 % by weight of the cellulose acetate propionate resin which is the same as used in Example 1 was added 1 % by weight of the cellulose powder which is the same as used in Example 1, and the resulting mixture was subjected to extrusion over a melt extruder having a circular die attached at the tip of an outlet to form a cylindrical film which was then subjected to 2-fold orientation both longitudinally and crosswise to obtain a cylindrical film casing having a flat width of 70 mm and a thickness of 40 μm. This casing had a matted and grained surface. The casing material, when immersed in a hot water (95°C x 30 sec.) showed shrinkage factors of 20 % in longitudinal direction and 20 % in crosswise direction. Measurements were carried out in the same manner as in Example 1, and the results are shown in Table 1.

Comparative Example 1

A commercially available fibrous casing material having a flat width of 90 mm and a thickness of 85 μm was employed.

Comparative Example 2

A nylon 6 resin (density: 1.14; m.p.: 224°C) was subjected to extrusion over a melt extruder having a circular die attached at the tip of an outlet to form a cylindrical film which was then subjected to simultaneous biaxial (longitudinally and crosswise) 3-fold orientation both to obtain a cylindrical film casing material having a flat width of 70 mm and a thickness of 40 μm. The casing material, when immersed in a hot water (95°C x 30 sec.), showed shrinkage factors of 20 % in longitudinal direction and 20 % in crosswise direction. Measurements were carried out in the same manner as in Example 1, and the results are shown in Table 1.

Table 1

| Casing | Amount of $O_2$ permeation (CC/m$^2$ · 24 hr · atm) | Amount of water vapor permeation (g/m$^2$ · 24hr) | Water vapor permeability constant (kg/m/day/Pa) P | Water vapor diffusion coefficient (m$^2$/hr) D | Water vapor solubility parameter (kg/m$^3$ · Pa) S |
|---|---|---|---|---|---|
| Example 1 | > 1,000 | 363 | $3.09 \times 10^{-9}$ | $2.21 \times 10^{-8}$ | $5.86 \times 10^{-3}$ |
| Example 2 | 90 | 293 | $1.82 \times 10^{-9}$ | $5.10 \times 10^{-9}$ | $1.49 \times 10^{-2}$ |
| Comparative example 1 | > 1,000 | > 1,000 | - | - | - |
| Comparative example 2 | 20 | 112 | $6.95 \times 10^{-10}$ | $1.07 \times 10^{-9}$ | $2.71 \times 10^{-2}$ |

Preparation example of smoked product

70 % by weight of minced pork, 20 % by weight of water, 7 % by weight of starch and 3 % by weight of table salt were mixed, and the resulting mixture was cut into fine pieces to prepare a paste-like raw material. The raw material was packed into the casings of the examples and those of comparative examples in an amount of 300 g respectively, and the casing materials were clip-sealed, followed by smoking treatment in the following manner.

| (1) Steaming heating | 60°C x 5 min. |
|---|---|
| (2) Drying | 60°C x 5 min. |
| (3) Introducing smoke | 60°C x 15 min. |
| (4) Drying | 60°C x 5 min. |
| (5) Introducing smoke again | 60°C x 25 min. |
| (6) Steam cooking | 74°C x 20 min. |
| (7) Cooling | water (ca. 10°C) spraying x 8 min. |

Smoked foods prepared by employing the casing materials of Examples 1 and 2 and Comparative Examples 1 and 2 were tested organoleptically by experts, and the results are shown by 10-grade evaluation in Table 2, provided that the flavor, taste and color of the smoked food employing the commercially available fibrous casing prepared in Comparative Example 1 are graded as 10, respectively.

Table 2

| Casing | Flavor | Taste | Color | Depth of smoked skin |
|---|---|---|---|---|
| Comparative example 1 | 10 | 10 | 10 | 2.5 mm |
| Example 1 | 10 | 9 | 10 | 2.5 mm |
| Example 2 | 10 | 8 | 7 | 2 mm |
| Comparative example 2 | 4 | 5 | 3 | 0.5 mm |

Depth of smoked skin: The thickness of the portion which was tinted with a fumed color by penetration of smoke into smoke-treated sausages from the surface

## Claims

1. A film for casing of a smoked food which comprises a cellulose acetate propionate.

2. The film according to Claim 1, wherein the film has a water vapor permeability constant of $7.00 \times 10^{-10}$ kg/m/day/Pa or more.

3. The film according to Claim 1, wherein the film has a water vapor permeability constant of $7.00 \times 10^{-10}$ to $5.00 \times 10^{-10}$ kg/m/day/Pa.

4. The film according to Claim 1, wherein the film has a water vapor permeability constant of $7.00 \times 10^{-10}$ to $1.00 \times 10^{-8}$ kg/m/day/Pa.

5. The film according to Claim 1, wherein a substitution degree of a propionyl group of the cellulose acetate propionate is 2.30 to 2.35 and a substitution degree of an acetyl group of the same is 0.3 to 0.5.

6. A film for casing of a smoked food which comprises a blended product of the cellulose acetate propionate according to any one of Claims 1 to 5 and a polyamide.

7. The film according to Claim 6, wherein a weight ratio of the cellulose acetate propionate and the polyamide is 5 to 95 : 95 to 5.

8. The film according to any one of Claims 1 to 7, wherein the film contains 0.1 to 10% by weight of a cellulose powder which contains 90% or more of powder having a particle size of 50 to 400 mesh.

9. The film according to any one of Claims 1 to 8, wherein the film contains at least one of a plasticizer selected from the group consisting of a phthalic acid ester, an aliphatic dibasic acid ester, a glycol derivative, a glycerol derivative and a phosphoric acid ester.

10. A smoked food which comprises a smoked food subjected to casing with the film according to any one of Claims 1 to 9.

**European Patent Office**

## EUROPEAN SEARCH REPORT

Application Number

EP 98 12 2564

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR 1 260 250 A (SOCIÉTÉ CIVILE DES PRODUITS LIFINE) 22 August 1961 <br> * page 1, column 1, paragraph 2 - paragraph 3 * <br> * page 2, column 1, paragraph 6 - paragraph 9; claims 1,2 * <br> * page 1, column 2 * | 1-5,8-10 | A22C13/00 <br> C08B3/16 |
| Y | US 1 928 652 A (C. J. MALM) 3 October 1933 <br> * page 2, line 134 - page 3, line 6; claims 1-18; example 6 * | 1-10 | |
| Y | US 5 292 876 A (K. E. SIMMONS) 8 March 1994 <br> * column 2, line 64 - column 3, line 20; claims 1-15 * | 1-10 | |
| Y | DE 956 906 C (A. BROSSETTE) <br> * the whole document * | 1-10 | |
| Y | FR 870 260 A (I. G. FARBENINDUSTRIE AG) 6 March 1942 <br> * the whole document * | 1-10 | TECHNICAL FIELDS SEARCHED (Int.Cl.6) <br><br> A22C <br> C08J <br> C08B |
| A | US 2 208 569 A (L. W. BLANCHARD) 23 July 1940 <br> * page 1, column 2, line 23 - line 38 * <br> * page 3, column 1, line 21 - line 30; claims 1-6 * | 1 | |
| A | GB 345 970 A (I. G. FARBENINDUSTRIE AG) <br> * page 1, line 66 - line 81; claims 1,2; example 1 * | 1 | |
| A | DE 738 546 C (KODAK AG) <br> * claim 1; examples 1,2 * | 1 | |

The present search report has been drawn up for all claims

| Place of search | Date of completion of the search | Examiner |
|---|---|---|
| THE HAGUE | 3 March 1999 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**    EP 98 12 2564

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-1999

| Patent document cited in search report | | Publication date | Patent family member(s) | | Publication date |
|---|---|---|---|---|---|
| FR 1260250 | A | 22-08-1961 | CH<br>GB<br>NL<br>NL | 403455 A<br>917965 A<br>122082 C<br>258156 A | |
| US 1928652 | A | 03-10-1933 | NONE | | |
| US 5292876 | A | 08-03-1994 | NONE | | |
| DE 956906 | C | | NONE | | |
| FR 870260 | A | 06-03-1942 | NONE | | |
| US 2208569 | A | 23-07-1940 | NONE | | |
| GB 345970 | A | | NONE | | |
| DE 738546 | C | | US | 2319051 A | 11-05-1943 |

EPO FORM P0459

For more details about this annex : see Official Journal of the European Patent Office, No. 12/82